# EUROPÄISCHE PATENTSCHRIFT

(11) **EP 3 306 524 B1**
(45) Veröffentlichungstag und Bekanntmachung des Hinweises auf die Patenterteilung: **05.07.2023**
(21) Anmeldenummer: 17181330.6
(22) Anmeldetag: 14.07.2017
(51) Int. Cl.: G06V 20/56, G06V 20/58, G08G 1/0962

(54) **VERFAHREN UND EINE ZUGEHÖRIGE VORRICHTUNG ZUR FÜHRUNG EINES FORTBEWEGUNGSMITTELS**
METHOD AND RELATED DEVICE FOR GUIDING A MEANS OF LOCOMOTION
PROCÉDÉ ET DISPOSITIF ASSOCIÉ PERMETTANT DE GUIDER UN MOYEN DE LOCOMOTION

(30) Priorität: 14.09.2016 DE 102016217489
(43) Veröffentlichungstag der Anmeldung: 11.04.2018
(73) Patentinhaber: Robert Bosch GmbH, 70442 Stuttgart (DE)
(72) Erfinder: Dian, Gergely, 2085 Pilisvoeroesvar (HU)

(56) Entgegenhaltungen:
- WO-A1-2016/071332
- US-A1- 2004 164 851

## Beschreibung

### Stand der Technik

Die vorliegende Erfindung betrifft ein Verfahren und eine zugehörige Vorrichtung zur Führung eines Fortbewegungsmittels, insbesondere ein Verfahren zur Unterstützung eines Anwenders des Fortbewegungsmittels, insbesondere eines Fahrers eines Ego-Kraftfahrzeugs. Die vorliegende Erfindung betrifft auch Ausführungsformen zur unbemannten Führung des Fortbewegungsmittels, beispielsweise Drohnen zu Land, zu Wasser und in der Luft.

Die im Stand der Technik beschriebenen Fahrerassistenzsysteme arbeiten mit einem Erfassungsbereich, welcher sich primär auf die in aktueller Bewegungsrichtung des Fortbewegungsmittels vorausliegende Umgebung richtet. Dies hat zur Ursache, dass sowohl der angestrebte Zielpunkt der Fortbewegungstrajektorie als auch etwaig zu erwartende Kollisionshindernisse in der Bewegungsrichtung liegen. Also bei Vorausfahrt liegen sie in der vor der Front des Fortbewegungsmittels vorausliegenden Umgebung, hingegen bei Rückwärtsfahrt in der vor dem Heck des Fortbewegungsmittels vorausliegenden Umgebung. Beispielsweise nutzen bekannterweise Fahrerassistenzsysteme für das Rückwärtseinparken im Heck angeordnete Umgebungssensoren.

WO 2016/012288 A1 betrifft ein Verfahren für ein Kamera-Betriebssystem eines Kraftfahrzeugs, in dem zwei Kameras verschiedene Umgebungsbereiche des Kraftfahrzeugs erfassen. Aus den separaten Bildern wird ein kontrastoptimiertes Gesamtbild durch eine Bildverarbeitungseinrichtung des Kamerasystems gebildet.

DE 10 2012 213 344 A1 offenbart ein Verfahren zur Fahrerunterstützung an Bord eines Kraftfahrzeugs. Hierin ist zum Zwecke einer Optimierung in Kurven- und Abbiegesituationen bereits beschrieben, den frontal ausgerichteten Erfassungsbereich durch das Umschwenken auf Seitenkameras zu erweitern. Die Schrift WO 2016/071332 A1 offenbart ein Betriebsverfahren für ein Fahrassistenzsystem mittels mindestens einer nach hinten ausgerichteten Kamera.

Mit diesem Ansatz schöpfen die herkömmlichen Systeme jedoch noch unvollständig das aus dem Gesamtumfeld rund um das Fortbewegungsmittel verfügbare Erkennungspotenzial aus, was die Gesamtheit von Umgebungsmerkmalen sowie der verkehrssituationsrelevanten Informationen um das Fortbewegungsmittel herum betrifft. Sobald sensorisch widrige Umweltbedingungen eintreten, welche gerade eine Erfassung mittels eines nach vorne gerichteten bzw. frontalen Umgebungssensors physikalisch beeinträchtigen, kann mitunter die Zuverlässigkeit des Standes der Technik temporär beeinträchtigt sein. Insbesondere optische Umgebungssensoren wie Frontkameras können bei widrigen Umweltbedingungen wie Gegenlicht, beispielsweise aufgrund eines niedrigen Sonnenstandes und/oder von Gegenverkehr mit Aufblendlicht, oder Streulicht, beispielsweise aufgrund reflektierender nasser Fahrbahnen und/oder bei Nebelbildung, an ihre Grenzen kommen.

Es ist daher eine Aufgabe der vorliegenden Erfindung, eine Technologie zur Führung eines Fortbewegungsmittels bereitzustellen, die noch zuverlässiger als der Stand der Technik arbeitet. Diese Aufgabe ist besonders relevant hinsichtlich einer durchgängig zu unterstützenden Verkehrssicherheit mit Blick auf zumindest temporäre Situationen, in welchen eine die vorausliegende Umgebung betreffende Erfassung sensorischphysikalisch beeinträchtigt ist.

### Offenbarung der Erfindung

Das erfindungsgemäße Verfahren zur Führung eines Fortbewegungsmittels umfasst die Schritte, die in Anspruch 1 definiert sind.

Dabei wird im Rahmen der Erfindung als rückwärtige Umgebung der räumliche Bereich mitsamt u.a. beinhalteter Umgebungsmerkmale wie beispielsweise Straßen, Bürgersteige, Leitplanken, Häuser, Bäume, andere Verkehrsteilnehmer, usw. aufgefasst, welcher hinter bzw. seitlich hinter dem Heck des Fortbewegungsmittels liegt, und zwar unabhängig von einem aktuellen Bewegungsvektor des Fortbewegungsmittels gemäß dessen Bewegungsrichtung und Geschwindigkeit. Also im Falle eines anwendergeführten Fortbewegungsmittels, insbesondere eines Kraftfahrzeuges oder Bootes, entspricht hier die rückwärtige Umgebung von ihrem Richtungssinn der Umgebung, welche ein Fahrer durch einen Blick in den Rückspiegel oder durch Wenden des Kopfes nach hinten zum Heck ausschnittweise erblicken kann, und zwar unabhängig davon, ob er im Vorwärts- oder Rückwärtsgang fährt oder das Fortbewegungsmittel gerade zum Stillstand gekommen ist. In anderen Worten bestimmt sich hier das gegensätzlich verwendete Begriffspaar rückwärtig versus vorausliegend bewegungsunabhängig und zu jedem beliebigen Zeitpunkt in Relation zu dem Fortbewegungsmittel als dreidimensionalen Körper mit je einem, gemäß einer Hauptbewegungsrichtung gesetzten, Front- bzw. Heckbereich sowie meist auch vorhandenen Seitenbereichen.

Im Rahmen der Erfindung wird als verkehrssituationsrelevante Information eine Kontextinformation für das Fortbewegungsmittel im Zusammenhang mit dem eigentlichen Ziel der Fortbewegung, insbesondere einer zuverlässigen Zielführung und einer unabdingbar verkehrssicheren sowie idealerweise auch andere Verkehrsteilnehmer weitestgehend nicht behindernden Verkehrsteilnahme verstanden. Es handelt sich hierbei um einen abstrakteren Begriff als der hier verwendete des Umgebungsmerkmals, welches auf Ebene konkreter dinglicher Gegenstände, beispielsweise Verkehrszeichen, stattfindet. Dabei fließen im Zuge der Erzeugung einer verkehrssituationsrelevanten Information, beispielsweise Gebotszonen wie Geschwindigkeitsbeschränkungen oder Fahrsituationen wie Stauende, unterschiedliche Gesichtspunkte ein. Diese müssen intelligent interpretiert und gewertet werden, beispielsweise mittels automatischer Mustererkennung.

Die vorliegende Erfindung weist gegenüber dem Stand der Technik den Vorteil auf, dass sie zunächst ein neuartiges Fallback-System im Falle von einer für den vorausliegenden Umgebungsbereich gestörten Erfassung bereitstellt. Dieser Vorteil fußt insbesondere auf dem Umstand, dass die rückwärtige Umgebung insbesondere unabhängig von der vorausliegenden Umgebung erfasst - respektive in einer Weiterentwicklung gleichzeitig miterfasst - wird, wodurch andere Umgebungsmerkmale alternativ und/oder zusätzlich verwendet werden.

Dabei gelingt es der vorliegenden Erfindung, zuverlässig die automatisch unterstützte Fortbewegungssicherheit zu erhöhen. Denn das erfindungsgemäße Verfahren arbeitet auch dann unbeeinträchtigt, wenn die vorausliegende Umgebung erfassende Umgebungssensoren, beispielsweise optisch erfassenden Frontkameras, Umgebungsbedingungen ausgesetzt sind, welche das Messprinzip stören. Das tritt insbesondere ein bei Gegenlichtverhältnissen, beispielsweise aufgrund eines niedrigen Sonnenstandes und/oder von Gegenverkehr mit Aufblendlicht, oder bei Streulichtbedingungen, beispielsweise aufgrund reflektierender nasser Fahrbahnen, und/oder bei Nebelbildung.

Zum anderen liegt ein großer Nutzen der vorliegenden Erfindung in einer bevorzugten Weiterentwicklung mit bidirektionaler Arbeitsweise darin, dass sie auch zur Unterstützung eines herkömmlichen, also die vorausliegende Umgebung erfassenden, Assistenzsystems bei dessen ungestörten Betrieb dient. Denn dann wird die in solchem Fall vorliegende Redundanz einer bidirektional erfassten und erkannten Umgebung zur Verifikation der Auswertungen zur Erzeugung der verkehrssituationsrelevanten Informationen verwendet. Auch daraus ergeben sich Vorteile hinsichtlich eines gesamthaft verbesserten Erkennungsgrades.

Die Unteransprüche zeigen bevorzugte Weiterbildungen der Erfindung.

Eine bevorzugte Ausgestaltung, die nicht Gegenstand der Ansprüche ist, sieht dabei weitere Schritte vor, welche sich auf eine vorausliegende Umgebung des Fortbewegungsmittels beziehen. Bei Umgebungsbedingungen, welche die zumindest näherungsweise gleichzeitige Erfassung der rückwärtigen und der vorausliegenden Umgebung ermöglichen, entsteht zumindest zu Anteilen eine Redundanz der Informationen, welche zur Beschreibung und Beurteilung der relevanten Verkehrssituationen interpretiert werden können. Auf diese Weise dienen die bevorzugt in das erfindungsgemäße Verfahren weiter eingeführten Schritte einer Verifikation durch Abgleich zweier auf unterschiedliche Art und Weise erzeugter Datensätze betreffs derselben zweiten verkehrssituationsrelevanten Information. Die vorzugsweise zusätzlichen Schritte beinhalten, dass eine vorausliegende Umgebung erfasst wird, um einen die vorausliegende Umgebung repräsentierenden zweiten Datensatz zu erzeugen. Auf Basis des zweiten Datensatzes wird ein in der vorausliegenden Umgebung befindliches zweites Umgebungsmerkmal automatisch erkannt. Vorzugsweise dient dies der Erzeugung eines vierten Datensatzes zur Abbildung der, die vorausliegende Umgebung betreffenden, zweiten verkehrssituationsrelevanten Information.

Die zweite verkehrssituationsrelevante Information liegt vorzugsweise, wie bereits oben ausgeführt, ferner in Form eines dritten Datensatzes vor, erzeugt nämlich auf Basis des in der rückwärtigen Umgebung befindlichen ersten Umgebungsmerkmals mittels elektronischem Deduzieren und/oder Prädizieren. Ein elektronisches Verifizieren der zweiten verkehrssituationsrelevanten Information wird durch Anwendung einer Abgleichsfunktion und/oder -operation zwischen der durch den vierten Datensatz repräsentierten und der durch den dritten Datensatz repräsentierten bewirkt.

Erfindungsgemäß ist es vorgesehen, dass das Verfahren weiterhin einen als intelligente Fallunterscheidung fungierenden Schritt umfasst, indem das erste Umgebungsmerkmal einer ersten Kategorie von punktuellen und/oder paarweisen Umgebungsmerkmalen (P) oder nicht erfindungsgemäß einer zweiten Kategorie von fortgesetzten Umgebungsmerkmalen (F), vorzugsweise von Fahrbahnleitlinien zugeordnet wird.

Unter die erste Kategorie von punktuellen und/oder paarweisen Umgebungsmerkmalen (P) fallen Verkehrszeichen wie korrespondierende Schilderpaare im Straßennetz, beispielsweise ein Ortsbeginn-Schild beim Hineinfahren in eine geschlossene Ortschaft, welches zu einem Ortsende-Schild für einen die geschlossene Ortschaft verlassenden Gegenverkehr an dem gegenüberliegenden Fahrbahnrand korrespondiert. Weitere Beispiele für paarweise auftretende Verkehrsschilder mit je nach Fahrtrichtung invertierter, jedoch korrespondierender Aussage umfassen im Wesentlichen solche, welche quer zur Bewegungsrichtung liegende Verkehrszonengrenzen betreffen: Beginn-Ende-Schilderpaare wie Vorfahrtstraße, Autobahnbereich, Verkehrsberuhigung, 30 km/h-Zone, Anwohnerparkbereich, Umweltzone, Privatstraße, etc.

Hingegen werden der zweiten Kategorie von fortgesetzten Umgebungsmerkmalen (F) insbesondere folgende Beispiel zugeordnet: Fahrbahnleitlinien wie Mittel- oder Seitenmarkierungen für einzelne Fahrspuren, Leitplanken, Bordsteinkanten, Zäune, Mauern, Hecken, Sicherheitsstreifen; beispielsweise für Flugzeuge Landebahnmarkierungen aus in die Bahn eingelassenen Leuchtmitteln; oder beispielsweise für Fortbewegungsmittel zu Wasser Kanaleinfriesungen der Binnenschifffahrt oder als Bojenketten fortlaufende Lotsen- oder Fischerei- oder anderweitige Seezeichen.

Dadurch ist zum einen eine erfindungsgemäße Ausführungsform für das Verfahren beschrieben, sofern das erste Umgebungsmerkmal der ersten Kategorie (P) zugeordnet ist. In einem solchen Fall wird erfindungsgemäß davon ausgegangen, dass die auf Basis des ersten Umgebungsmerkmals deduzierte und/oder prädizierte zweite verkehrssituationsrelevante Information die genaue Inversion und/oder Umkehrung einer jeweilig dem ersten Umgebungsmerkmal zugehörigen verkehrssituationsrelevanten Information bedeutet. Um in dem oben bereits erwähnten Beispiel für ein korrespondierendes Schilderpaar Ortsbeginn-Schild in Kombination mit Ortsende-Schild für den Gegenverkehr zu bleiben: Fährt ein Fahrzeug in eine geschlossene Ortschaft hinein, kann eine Frontkamera ein Ortsbeginn-Schild erfassen und wenige gefahrene Meter später kann eine Heckkamera ein korrespondierendes Ortsende-Schild erfassen, welches für den die geschlossene Ortschaft verlassenden Gegenverkehr an dem gegenüberliegenden Fahrbahnrand aufgestellt ist. Jedes jeweilige Schild des korrespondierenden Schilderpaars beinhaltet die identische, die vorausliegende Umgebung betreffende, zweite verkehrssituationsrelevante Information, nämlich hier das Einfahren in eine geschlossene Ortschaft mit entsprechender durch eine Straßenverkehrsordnung gesetzlich festgelegter Geschwindigkeitsbeschränkung. In anderen Worten bezeichnen beide Schilder, obwohl das eine ein Gebot bedeutet, das andere eine Aufhebung des Gebots, dasselbe, nämlich die Ortsgrenze einer Gebotszone. Erkennungsrechentechnisch kann vorzugsweise ein solches Zonengebot mit einem bewegungsrichtungsabhängigen Vorzeichen plus/minus behandelt werden. Das Vorzeichen besagt, ob sich das Fortbewegungsmittel in eine Gebotszone hinein bewegt oder eine solche gerade verlässt, sodass sich die Gültigkeit nicht mehr auf den aktuell befahrenen Straßenabschnitt erstreckt. In den Fällen solcher Informationsredundanz werden die jeweilig aus unterschiedlichen Informationsquellen stammenden, hier aus Front und Heckkamera übermittelten, Datensätze gegeneinander automatisch abgeglichen und verifiziert.

Zum anderen ist eine weiter bevorzugte Ausführungsform für das Verfahren beschrieben, die nicht Gegenstand der Ansprüche ist, sofern das erste Umgebungsmerkmal der zweiten Kategorie zugeordnet ist. In einem solchen Fall wird bevorzugt davon ausgegangen, dass die auf Basis des ersten Umgebungsmerkmals deduzierte und/oder prädizierte zweite verkehrssituationsrelevante Information als für die vorausliegende Umgebung entsprechend geltend angenommen wird. Beispielsweise wird bei einer regulär fortgesetzten Fahrt eines Kraftfahrzeugs eine Fahrbahnmarkierung, wie eine Mittellinie und/oder ein seitlicher Sicherheitsstreifen, in Fahrtrichtung quasi kontinuierlich fortlaufen, also in etwa wie eine durchgezogene Linie, wenn auch möglicherweise mit gewissen zulässigen Lücken. Erkennungsrechentechnisch kann eine solche Konstellation in Art von zwei in etwa stetig angenommenen, mit numerischen Stützstellen versehenen Kurvenverläufen angenommen und modelliert werden. Dabei stellt die eine auf das Fortbewegungsmittel bezogene Kurve dessen Trajektorie dar und die andere eine auf Umgebungsmerkmale bezogene, regelmäßig ortsfeste Kurve. Mit der Bewegung können die Veränderungen der Kurven, insbesondere auf sich selber bezogen und/oder zueinander, automatisch nachverfolgt und/oder korrigiert werden. Dabei dienen insbesondere von jeweilig aktuellen Stützstellen hochgerechnete Extrapolationen zur Prognose. In anderen Worten geht man bei einem solchen fortgesetzten Umgebungsmerkmal der zweiten Kategorie (F) davon aus, dass sich die in der zeitlichen Fortbewegung des Fortbewegungsmittels nächste, die vorausliegende Umgebung betreffende, verkehrssituationsrelevante Information als eine gedachte Fortsetzung der gerade vergangenen, die rückwärtige Umgebung betreffenden, verkehrssituationsrelevante Information abbilden lässt. In diesem Kontext würde also beispielsweise auch eine seitliche Fahrbahnmarkierung, welche eine 90°-Biegung in z.B. eine Abbiegestraße oder sogar eine Kehrtwende beschreibt, gleichermaßen als fortgesetztes Umgebungsmerkmal noch aufgefasst.

Bevorzugte Ausgestaltungen sehen vor, dass der Verfahrensschritt des Erfassens der rückwärtigen Umgebung mittels einer ersten Erfassungseinheit und/oder des Erfassens der vorausliegenden Umgebung mittels einer zweiten Erfassungseinheit ausgeführt wird. Dabei ist in einer bevorzugten Ausführungsform die erste und/oder zweite Erfassungseinheit als eine optische Erfassungseinheit, vorzugsweise als eine 2D- und/oder 3D-Kamera, ausgebildet. Alternativ oder zusätzlich werden Umgebungssensoren auf Basis von Radar und/oder von Lidar bzw. Laser eingesetzt. Weitere Varianten eines Umgebungssensors umfassen solche, deren Messprinzipien physikalische Größen wie Kapazität und/oder Ultraschall und/oder Wärmestrahlung zu Grunde legen.

Dabei ist bevorzugt die Verwendung von solchen Umgebungssensoren vorgesehen, mit welchen die bereits im Markt befindlichen Fahrzeuge bzw. die auf ihnen installierten Anwenderassistenzsystemen ohnehin serienmäßig ausgerüstet sind. Insbesondere sind heutige Fortbewegungsmittel vielfach mit Umgebungssensoren zur Echtzeit-Abstandsmessung ausgestattet. Dazu werden noch hauptsächlich Radarsensoren eingesetzt, wobei die neueste Technologieentwicklung den serienreifen Einsatz von Lidar-Systemen verfolgt.

Gemäß einer vorteilhaften Weiterbildung des erfindungsgemäßen, die nicht Gegenstand der Ansprüche ist, umfasst dieses noch weitere Schritte auf Basis der Einbeziehung eines, meist ohnehin bereits vorhandenen, Navigationssystems und/oder Fahrdynamikregelsystems und der daraus gewonnenen zusätzlichen Informationen und/oder Datensätze. Dazu werden beispielsweise mittels des Navigationssystems vorzugsweise eine Position (M) und/oder ein Bewegungsvektor (V) des Fortbewegungsmittels bestimmt. In Folge wird ein elektronisch erkanntes erstes und/oder zweites Umgebungsmerkmal mit zuvor auf einem elektronischen Speichermedium hinterlegten und von dort auf Basis der Position und/oder des Bewegungsvektors des Fortbewegungsmittels bezogenen Umgebungsmerkmal elektronisch abgeglichen. Insbesondere kann so die mittels des Navigationssystems bezogene Information über einen jeweilig aktuell, also gemäß dieser beiden bevorzugten Parameter (M) und (P), relevanten Ausschnitt der Fortbewegungsmittel-Trajektorie auf einfache Weise verwendet werden, um beispielsweise die Erkennung von Zonen mit spezifischen Umgebungsmerkmalen wie geschlossene Ortschaft oder von fortgesetzten Umgebungsmerkmalen wie Fahrbahnmarkierungen weiter zu präzisieren. Auch ist im Rahmen der Erfindung die Einspeisung von Zusatzinformationen von aktueller und/oder temporär wirksamer Natur vorteilhaft, beispielsweise Input über Staumeldungen, Umleitungsschilder und/oder über tageszeitabhängige Gebotszonen, wie Nachtruhe, Schulbeginn- und - Ende, und/oder über witterungsbedingte Verkehrsbeschränkungen, wie Nebel,-Blitzeisgefahr, und/oder über klimabedingte, wie Smoggefahr, Ozonkonzentration in der Luft, und/oder über saisonabhängige, wie Urlaubverkehr, um nur einige Beispiele zu nennen.

Als ein gegenüber dem Verfahren weiterer Erfindungsgedanke betrifft die Erfindung ein erfindungsgemäßes elektronisches Steuergerät zur Führung eines Fortbewegungsmittels nach Anspruch 2.

Gemäß einem drittgenannten Aspekt der vorliegenden Erfindung wird ein Fortbewegungsmittel mit einem erfindungsgemäßen elektronischen Steuergerät nach Anspruch 2 vorgeschlagen.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
Figur 1 eine schematische Darstellung einer Situation als Aufsicht, in welcher ein Ausführungsbeispiel eines erfindungsgemäßen elektronischen Steuergerätes in einem Ausführungsbeispiel eines erfindungsgemäßen Fortbewegungsmittels verbaut ist.
Figur 2 ein Flussdiagramm veranschaulichend Schritte eines Ausführungsbeispiels eines erfindungsgemäßen Verfahrens

### Ausführungsform(en) der Erfindung

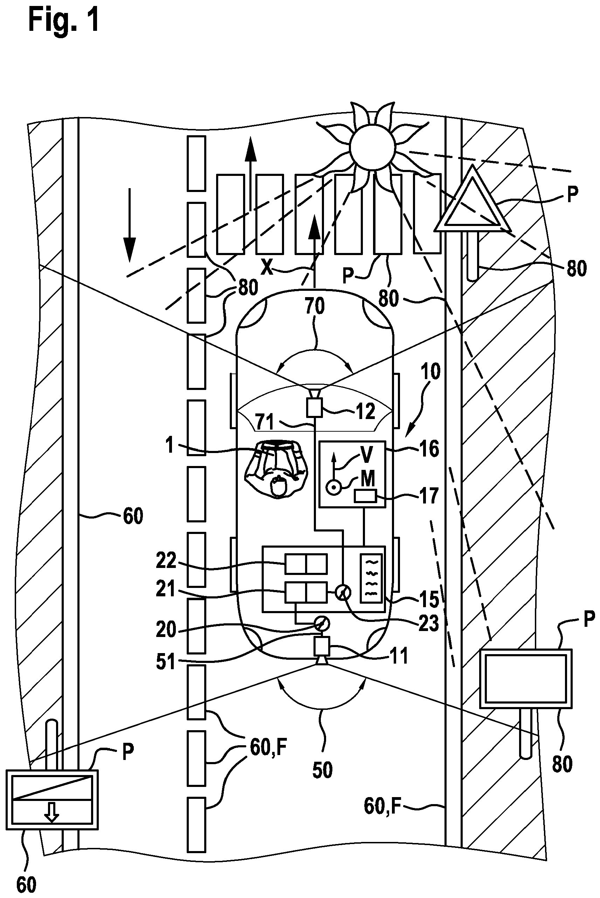

Figur 1 zeigt einen PKW 10 als Ausführungsbeispiel eines erfindungsgemäßen Fortbewegungsmittels, welches von einem im Fond des PKWs 10 vorne links sitzenden Fahrer 1, in einer Bewegungsrichtung x, nämlich vorwärts, gefahren wird. Dargestellt ist eine Situation kurz nach dem Einfahren in eine geschlossene Ortschaft, wobei sich der PKW 10 auf einer einspurigen Straße im Rechtsverkehr Kontinentaleuropas bewegt.

Dabei erfasst eine im Heck des PKWs 10 angeordnete und nach hinten ausgerichtete Heckkamera 11 als eine erste Erfassungseinheit in einem angedeuteten rückwärtigen Erfassungswinkel eine rückwärtige Umgebung 50. Auf Grundlage der erfassten Messsignale wird ein die rückwärtige Umgebung 50 repräsentierender erster Datensatz 51 erzeugt.

Im Fond des PKWs 10 befindet sich in dieser Ausführungsform weiterhin eine nach vorne ausgerichtete Frontkamera 12 als eine zweite Erfassungseinheit, welche eingerichtet ist, in einem angedeuteten vorausliegenden Erfassungswinkel eine vorausliegende Umgebung 70 optisch zu erfassen. Daraus wird für die vorausliegende Umgebung 70 ein zweiter Datensatz 71 erzeugt, welcher diese repräsentiert. Die Kameras 11,12 können noch weiteren Zwecken zur Unterstützung des Fahrers 1 dienen.

An Bord des PKWs 1 sind ein elektronisches Steuergerät 15 zur Führung des PKWs 10 sowie ein optional vorhandenes Navigationssystem 16 mit einem elektronischen Speichermedium 17 eingebaut. Das beispielsweise per GPS satellitengestützte Navigationssystem 16 ist hier eigenständig vorgesehen. Das elektronische Steuergerät 15 umfasst eine erste Schnittstelle 20, ein Datenspeichermittel, eine Erkennungseinheit 21 und eine Auswerteeinheit 22.

Die erste Schnittstelle 20 bezieht von der Heckkamera 11 den die rückwärtige Umgebung 50 repräsentierenden ersten Datensatz 51, während in diesem Ausführungsbeispiel zusätzlich auch noch eine zweite Schnittstelle 23 von der Frontkamera 12 den die vorausliegende Umgebung 70 repräsentierenden zweiten Datensatz 71 bezieht. Hier wird von beiden Schnittstellen 20, 23 der jeweilige Datensatz 51, 71 an die Erkennungseinheit 21 übermittelt. Die Erkennungseinheit 21 ist erfindungsgemäß eingerichtet, zunächst ein in der rückwärtigen Umgebung 50 befindliches erstes Umgebungsmerkmal 60 auf Basis des ersten Datensatzes 51 mittels automatischer Mustererkennung zu erkennen. Bei den für die Situation der Figur 1 dargestellten ersten Umgebungsmerkmalen 60 handelt es sich einerseits um einer zweiten Kategorie F zugehörige fortgesetzte Umgebungsmerkmale 60, 80, und zwar um eine links vom PKW 10 gestrichelt dargestellte Mittellinie und eine jeweilig entlang beider Fahrbahnränder laufende äußere Fahrbahnbegrenzung. Dabei verlaufen diese Fahrbahnmarkierungen in der schematisch vereinfachenden Darstellung der Figur 1 geradeaus und in etwa parallel zur Bewegungsrichtung x des PKWs 10. Andererseits werden punktuelle und/oder paarweise Umgebungsmerkmale, insbesondere ein Verkehrsschilderpaar P, 60, 80, welches auf eine geschlossene Ortschaft hindeutet, einer ersten Kategorie P zugeordnet.

Mittels der Auswerteeinheit 22 wird auf Basis des ersten Umgebungsmerkmals 60 eine die vorausliegende Umgebung 70 betreffende zweite verkehrssituationsrelevante Information 81 elektronisch deduziert. In dem hier dargestellten Ausführungsbeispiel mit einer beispielhaften Situation interpretiert die Auswerteeinheit 22 anhand des in der rückwärtigen Umgebung 50 für den Gegenverkehr aufgestellten Ortsende-Schildes 60, P, wie links unten in Figur 1 zu sehen, dass der PKW 10 soeben in eine geschlossene Ortschaft mit gesetzlicher Tempobeschränkung eingefahren ist.

Hingegen war es aufgrund einer tief am Horizont stehenden Sonne und der daraus resultierenden, stark blendenden und überstrahlenden Gegenlichtverhältnissen sowohl für den Fahrer 1 selber als auch für die auf die vorausliegende Umgebung 70 gerichtete Frontkamera 12 deutlich erschwert, das für den hier dargestellten Moment kurz zuvor passierte Ortseingangs-Schild, 80, P, wie rechts unten in Figur 1 zu sehen, zu sehen respektive optisch zu erfassen und dies als ein die vorausliegende Umgebung 70 befindliches zweites Umgebungsmerkmal 80 wahrzunehmen respektive sicher zu erkennen.

Der Fahrer kann, vom elektronischen Steuergerät 15 ausgelöst, beispielsweise aktiv zur Warnung über die die vorausliegende Umgebung 70 betreffende zweite verkehrssituationsrelevante Information 81 der Tempolimitzone durch ein entsprechendes Ausgabesignal informiert werden, beispielsweise im Display des Fahrzeugs und/oder in Form eines Sprachkommandos aus dem Navigationssystem 16. Zusätzlich oder alternativ kann das elektronische Steuergerät 15 eine automatische Abregelung des Motorbetriebs hinunter auf die herrschende Tempobeschränkung bewirken, beispielsweise indem es mit einer Motorsteuereinheit kommuniziert.

Weiterhin werden die in der rückwärtigen Umgebung 50 erkannten fortgesetzten Fahrbahnmarkierungen, hier die Mittellinie und die durchgezogenen Fahrbahnrandmarkierungen 60, F, dahingehend durch das elektronische Steuergerät 15 ausgewertet, dass dieses zunächst eine logische Fallunterscheidung trifft, dass diese in die zweite Kategorie F von fortgesetzten Umgebungsmerkmale fallen und gerade nicht in die erste Kategorie P. Indem beispielsweise die Mittellinie nun als ein erstes Umgebungsmerkmal 60 der zweiten Kategorie F zugeordnet ist, wird von einer daraus hergeleiteten zweiten verkehrssituationsrelevanten Information 81, hier in Form der Kenntnis über eine vorhandene Fahrspurtrennung sowie über deren Kurvenverlauf, angenommen, dass sie für die vorausliegende Umgebung 70 entsprechend auch weiter gilt. In diesem Ausführungsbeispiel ,das nicht Gegenstand der Ansprüche ist, extrapoliert die Auswerteeinheit 22 die rückwärtig liegende Mittellinie 60, F als in erster Näherung als gerade Linie fortgeführt auf die vorausliegende Umgebung 70 weiter zu einer vorausliegenden Mittellinie 80.

Alle zweiten verkehrssituationsrelevanten Informationen 81 werden in dieser Ausführungsform als ein dritter Datensatz 83 auf dem Datenspeichermittel temporär, also für eine zeitlich relevante Interimsphase, abgelegt.

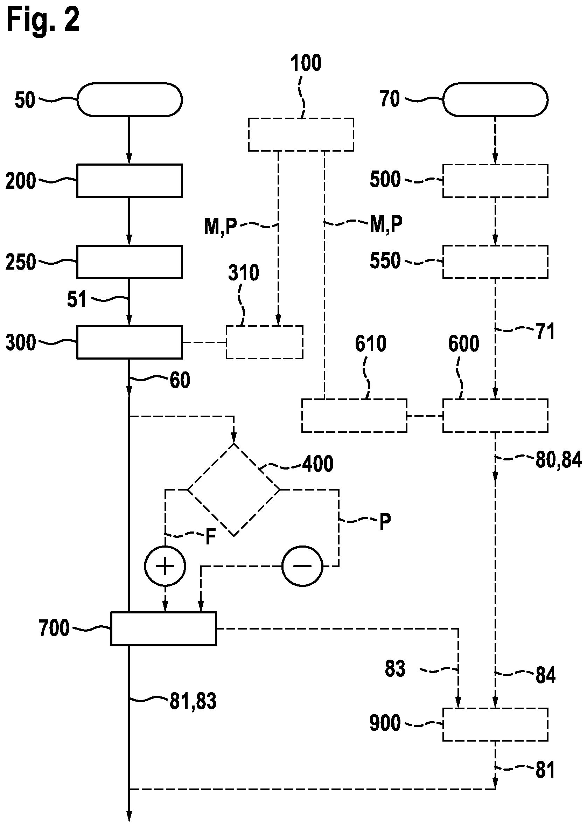

Figur 2 zeigt ein Ablaufdiagramm eines Verfahrens zur Führung eines Fortbewegungsmittels 10. Erfindungsgemäß laufen die zentralen Schritte folgendermaßen ab. Diese sind mittels Einkastungen mit durchgezogenen Umrahmungslinien graphisch herausgehoben und damit gegenüber den optionalen Schritten in gestrichelt-linierten Einkastungen abgesetzt:
Zunächst wird eine rückwärtige Umgebung 50 erfasst 200, woraus ein die rückwärtige Umgebung 50 repräsentierender erster Datensatz 51 erzeugt 250wird. In einem folgenden Schritt 300 wird, auf Basis des ersten Datensatzes 51, ein in der rückwärtigen Umgebung 50 befindliches erstes Umgebungsmerkmal 60 automatisch erkannt. In einem nachfolgenden Schritt 700 wird, auf Basis des ersten Umgebungsmerkmals 60, eine die vorausliegende Umgebung 70 betreffende zweite verkehrssituationsrelevante Information 81 elektronisch deduziert und/oder prädiziert und vorzugsweise ein dritter Datensatz 83 daraus generiert.

Zusätzlich, wie bereits in dem Ausführungsbeispiel der Figur 1 beschrieben, können optional folgende weitere Schritte 500, 550, 600, 900 ablaufen, welche die nun vorausliegende Umgebung 70 betreffen und nicht Gegenstand der Ansprüche sind. Dabei sind im Zusammenhang mit den für das erfindungsgemäße Verfahren zentralen Schritten 200, 250,300, 700 grundsätzlich unterschiedliche Ausführungsformen denkbar, welche sich durch unterschiedliche sequenzielle Abfolgen und kausale Verschachtelungen der einzelnen Schritte untereinander unterscheiden. Und zwar wird die vorausliegende Umgebung 70 erfasst 500, woraus ein die vorausliegende Umgebung 70 repräsentierender zweiter Datensatz 71 erzeugt 550 wird. In einem folgenden Schritt 600 wird daraus ein zweites Umgebungsmerkmal 80 automatisch erkannt und vorzugsweise als ein vierter Datensatz 84 generiert.

Anschließend wird ein elektronischer Verifizierungsschritt 900 auf die beiden für die zweite verkehrssituationsrelevante Information 81 vorhandenen Datensätze 84, 83 eine Abgleichsfunktion und/oder -operation angewendet, wodurch in diesem Ausführungsbeispiel der vierte Datensatz 84 mittels des dritten Datensatzes 83 automatisch verifiziert wird. Es sei an dieser Stelle angemerkt, dass grundsätzlich unterschiedliche Ausführungsformen und innerhalb unterschiedlicher Ausführungsformen unterschiedliche Situationen denkbar sind, in denen entsprechend ein vierter Datensatz 84 gar nicht oder nur vernachlässigbar vorhanden ist und entsprechend vom elektronischen Steuergerät 15 genutzt wird, bis hin zu solchen Konstellationen, in denen er dominant herangezogen wird.

Das Verfahren, wie aus Fig. 2 ebenfalls ersichtlich, kann durch die optionale Einführung eines weiter die logische Verarbeitung des ersten Umgebungsmerkmals 60 betreffenden weiteren Schrittes zur Unterscheidung 400 weiter verfeinert werden. Dazu wird einerseits bestimmt, ob ein erstes Umgebungsmerkmal einer ersten Kategorie von punktuellen und/oder paarweisen Umgebungsmerkmalen P, vorzugsweise von korrespondierenden Schilderpaaren im Straßennetz, oder einer zweiten Kategorie von fortgesetzten Umgebungsmerkmalen F, vorzugsweise von Fahrbahnleitlinien, zuzuordnen 400 ist. Im Falle eines der ersten Kategorie P zugeordneten 400 ersten Umgebungsmerkmales 60 wird die zweite verkehrssituationsrelevante Information 81 in der Weise behandelt, dass sie die genaue Inversion und/oder Umkehrung einer jeweilig dem ersten Umgebungsmerkmal 60 zugehörigen verkehrssituationsrelevanten Information bedeutet. Hingegen im anderen Falle eines der zweiten Kategorie F zugeordneten 400 ersten Umgebungsmerkmales 60 wird die auf Basis des ersten Umgebungsmerkmals 60 deduzierte und/oder prädizierte 700 zweite verkehrssituationsrelevante Information 81 als für die vorausliegende Umgebung 70 entsprechend geltend angenommen. Grundsätzlich ist es denkbar, den Schritt des Unterscheidens 400 weiter auch zur Verbesserung der Erkennung der die vorausliegende Umgebung 70 betreffenden Umgebungsmerkmale 80 einzusetzen.

Weitere optionale Schritte 310 und/oder 610 beziehen die Verwertung von aus einem Navigationssystem 16 bezogenen Informationen ein. Und zwar werden zunächst eine Position M und/oder ein Bewegungsvektor V des Fortbewegungsmittels 10 durch das Navigationssystem 16 bestimmt 100. Anschließend findet bevorzugt ein elektronisches Abgleichen 310, 610 eines elektronisch erkannten 300, 600 ersten und/oder zweiten Umgebungsmerkmals 60, 80 mit zuvor auf einem elektronischen Speichermedium 17 hinterlegten und von dort auf Basis der Position P und/oder des Bewegungsvektors V des Fortbewegungsmittels 10 bezogenen Umgebungsmerkmals 60, 80 statt.

## Patentansprüche

1. Verfahren zur Führung eines Fortbewegungsmittels (10), umfassend die Schritte:
• Erfassen (200) einer rückwärtigen Umgebung (50);
• Erzeugen (250) eines die rückwärtige Umgebung (50) repräsentierenden ersten Datensatzes (51); und
• automatisches Erkennen (300), auf Basis des ersten Datensatzes (51), eines in der rückwärtigen Umgebung (50) befindlichen ersten Umgebungsmerkmales (60);
und
• elektronisches Deduzieren und/oder Prädizieren (700), auf Basis des ersten Umgebungsmerkmals (60), von einer die vorausliegende Umgebung (70) betreffenden zweiten verkehrssituationsrelevanten Information (81); **dadurch gekennzeichnet, dass** folgender Schritt durchgeführt wird
• Zuordnen (400) des ersten Umgebungsmerkmals (60) zu einer ersten Kategorie von korrespondierenden Schilderpaaren im Straßennetz, wobei die auf Basis des ersten Umgebungsmerkmals (60) deduzierte und/oder prädizierte (700) zweite verkehrssituationsrelevante Information (81) die genaue Inversion und/oder Umkehrung einer jeweilig dem ersten Umgebungsmerkmal (60) zugehörigen ersten verkehrssituationsrelevanten Information bedeutet.

2. Elektronisches Steuergerät (15) zur Führung eines Fortbewegungsmittels (10), umfassend:
• eine erste Schnittstelle (20) zum Bezug eines eine rückwärtige Umgebung (50) repräsentierenden ersten Datensatzes (51);
• ein Datenspeichermittel;
• eine Erkennungseinheit (21), welche eingerichtet ist, ein in der rückwärtigen Umgebung (50) befindliches erstes Umgebungsmerkmal (60) auf Basis des ersten Datensatzes (51) zu erkennen (300);
• eine Auswerteeinheit (22), welche eingerichtet ist, auf Basis des ersten Umgebungsmerkmals (60) eine vorausliegende Umgebung (70) betreffende zweite verkehrssituationsrelevante Information (81) elektronisch zu deduzieren und/oder zu prädizieren (700), wobei
• das elektronische Steuergerät (15) dazu eingerichtet ist, ein Verfahren nach Anspruch 1 auszuführen.

3. Fortbewegungsmittel (10) mit einem elektronischen Steuergerät (15) nach Anspruch 2.

## Claims

1. Method for guiding a means of transport (10), comprising the following steps:
• capturing (200) a rear environment (50);
• generating (250) a first data set (51) representing the rear environment (50); and
• automatically recognizing (300), on the basis of the first data set (51), a first environmental feature (60) situated in the rear environment (50); and
• electronically deducing and/or predicting (700), on the basis of the first environmental feature (60), second traffic-situation-relevant information (81) relating to the environment (70) ahead;
**characterized in that** the following step is carried out:
• assigning (400) the first environmental feature (60) to a first category of corresponding pairs of signs in the road network, wherein the second traffic-situation-relevant information (81) deduced and/or predicted (700) on the basis of the first environmental feature (60) signifies the exact inversion and/or reversal of first traffic-situation-relevant information respectively associated with the first environmental feature (60).

2. Electronic control device (15) for guiding a means of transport (10), comprising:
• a first interface (20) for obtaining a first data set (51) representing a rear environment (50);
• a data storage means;
• a recognition unit (21) configured to recognize (300) a first environmental feature (60) situated in the rear environment (50) on the basis of the first data set (51);
• an evaluation unit (22) configured to electronically deduce and/or predict (700) second traffic-situation-relevant information (81) relating to an environment (70) ahead on the basis of the first environmental feature (60), wherein
• the electronic control device (15) is configured to carry out a method according to Claim 1.

3. Means of transport (10) comprising an electronic control device (15) according to Claim 2.

## Revendications

1. Procédé permettant de guider un moyen de locomotion (10), comprenant les étapes suivantes :
• la détection (200) d'un environnement arrière (50) ;
• la génération (250) d'un premier ensemble de données (51) représentant l'environnement arrière (50) ; et
• la reconnaissance automatique (300), sur la base du premier ensemble de données (51), d'une première caractéristique d'environnement (60) située dans l'environnement arrière (50) ; et
• la déduction et/ou la prédiction électronique (700), sur la base de la première caractéristique d'environnement (60), d'une deuxième information (81) relative à la situation du trafic et concernant l'environnement avant (70) ;
**caractérisé en ce que** l'étape suivante est exécutée :
• l'association (400) de la première caractéristique d'environnement (60) à une première catégorie de paires correspondantes de panneaux dans le réseau routier, dans lequel la deuxième information (81) relative à la situation du trafic, déduite et/ou prédite (700) sur la base de la première caractéristique d'environnement (60), désigne l'inversion et/ou le retournement exact d'une première information relative à la situation du trafic respectivement associée à la première caractéristique d'environnement (60).

2. Appareil de commande électronique (15) permettant de guider un moyen de locomotion (10), comprenant :
• une première interface (20) permettant de se référer à un premier ensemble de données (51) représentant un environnement arrière (50) ;
• un moyen de stockage de données ;
• une unité de reconnaissance (21) qui est conçue pour reconnaître (300) une première caractéristique d'environnement (60) située dans l'environnement arrière (50) sur la base du premier ensemble de données (51) ;
• une unité d'évaluation (22), qui est conçue pour déduire et/ou prédire (700) électroniquement, sur la base de la première caractéristique d'environnement (60), une deuxième information (81) relative à la situation du trafic et concernant un environnement avant (70), dans lequel
• l'unité de commande électronique (15) est conçue pour mettre en œuvre un procédé selon la revendication 1.

3. Moyen de locomotion (10) comportant un appareil de commande électronique (15) selon la revendication 2.
